# EUROPEAN PATENT APPLICATION

(11) **EP 4 813 709 A1**
(43) Date of publication of application: **30.09.2026**
(21) Application number: 26167054.1
(22) Date of filing: 24.03.2026
(51) Int. Cl.: B60K 6/24, B60K 6/26, B60K 6/40, B60L 1/00, B60L 1/02, B60L 15/00, B60L 50/10, B60L 50/61

(54) **VEHICLE**

(30) Priority: 28.03.2025 JP 2025056326; 17.02.2026 JP 2026023693
(71) Applicant: Toyota Jidosha Kabushiki Kaisha, Toyota-shi, Aichi-ken 471-8571 (JP)
(72) Inventor: TSUKASHIMA, Hiroyuki, TOYOTA-SHI, AICHI-KEN, 471-8571 (JP); OKOCHI, Toshinori, TOYOTA-SHI, AICHI-KEN, 471-8571 (JP); OTSUKA, Akira, TOYOTA-SHI, AICHI-KEN, 471-8571 (JP); GOTO, Kenji, TOYOTA-SHI, AICHI-KEN, 471-8571 (JP)
(74) Representative: Cabinet Beau de Loménie

(57) **Abstract**

A hybrid electric vehicle (100) includes an engine compartment (10) at a front portion of the hybrid electric vehicle. In the hybrid electric vehicle (100), the engine compartment (10) includes a drive device (12). A motor generator, a power control unit (17) that controls power supplied to the motor generator, and a gear mechanism are integrated in the drive device (12). The engine compartment (10) also includes an electrical device (auxiliary battery) (13, 14, 15). The engine and the drive device are arranged side by side in a vehicle width direction. The electrical device is arranged above the drive device (12).

## Description

### BACKGROUND

### 1. Field

The present disclosure relates to a vehicle.

### 2. Description of Related Art

WO2012/160618A discloses a vehicle that includes an engine compartment at a front portion of the vehicle.

An engine, a power control unit, and a gear mechanism are disposed in the engine compartment. The power control unit controls power supplied to a motor generator.

An electrical device other than the power control unit, such as an auxiliary battery or a motor-driven compressor, may also be disposed in the engine compartment. In this case, in addition to the motor generator, the gear mechanism, and the power control unit, the electrical device needs to be arranged as compactly as possible in the engine compartment.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides a vehicle that includes an engine compartment at a front portion of the vehicle. The engine compartment includes a drive device. A motor generator, a power control unit that controls power supplied to the motor generator, and a gear mechanism are integrated in the drive device. The engine compartment also includes an electrical device. The drive device and an engine are arranged side by side in a vehicle width direction. The electrical device is disposed above the drive device.

Other features and aspects will be apparent from the following detailed description, the drawings, and the claims.

### BRIEF DESCRIPTION OF THE DRAWINGS

Fig. 1 is a schematic diagram showing the arrangement of devices in an engine compartment when a hybrid electric vehicle according to an embodiment is viewed from above.
Fig. 2 is a schematic diagram showing the arrangement of the devices in the engine compartment when the hybrid electric vehicle of Fig. 1 is viewed from the side.
Fig. 3 is a schematic diagram showing the configuration of the drive device included in the hybrid electric vehicle of Fig. 1.
Fig. 4 is a schematic diagram showing the arrangement of the devices in the engine compartment when the hybrid electric vehicle according to a first modification is viewed from above.
Fig. 5 is a schematic diagram showing the arrangement of the devices in the engine compartment when the hybrid electric vehicle according to the first modification is viewed from the side.
Fig. 6 is a schematic diagram showing the arrangement of the devices in the engine compartment when the hybrid electric vehicle according to a second modification is viewed from above.
Fig. 7 is a schematic diagram showing the arrangement of the devices in the engine compartment when the hybrid electric vehicle according to the second modification is viewed from the side.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

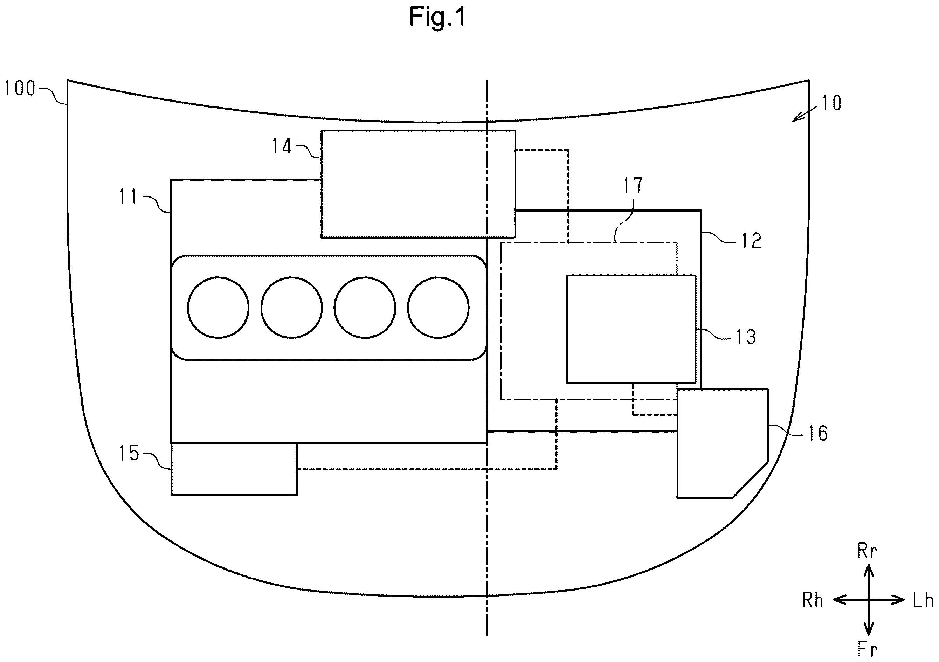

In Figs. 1 to 7, arrows indicate directions. In Figs. 1 to 7, Fr and Rr indicate the forward and rearward directions, respectively, of a hybrid electric vehicle 100. In Figs. 1, 4, and 6, Rh and Lh indicate the right and left sides, respectively, of the hybrid electric vehicle 100, as viewed by an occupant facing forward.

The hybrid electric vehicle 100 according to an embodiment will now be described with reference to Figs. 1 to 3.

### Arrangement of Devices in Engine Compartment 10

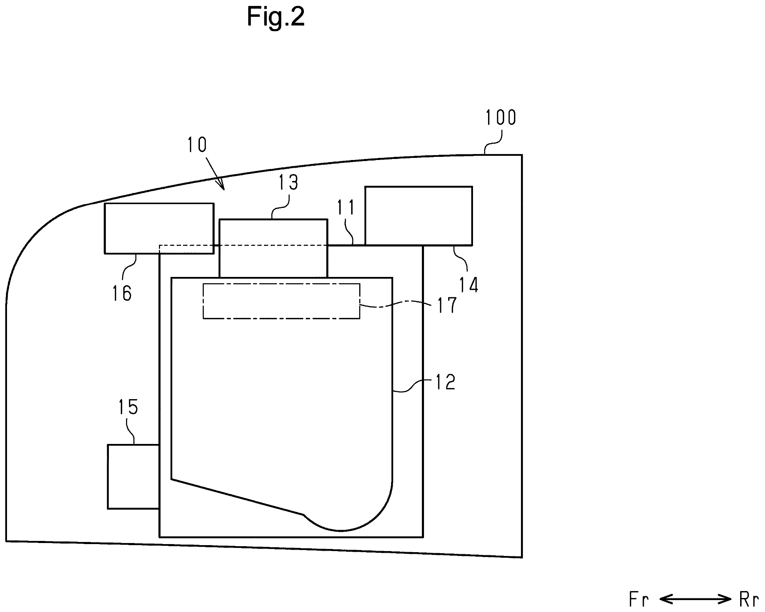

The hybrid electric vehicle 100 includes an engine compartment 10 at the front portion the hybrid electric vehicle 100. Fig. 1 shows the arrangement of devices in the engine compartment 10 when the hybrid electric vehicle 100 is viewed from above. Fig. 2 shows the arrangement of the devices in the engine compartment 10 when the hybrid electric vehicle 100 is viewed from the left side.

As shown in Figs. 1 and 2, the hybrid electric vehicle 100 includes an engine 11 and a drive device 12 that are disposed in the engine compartment 10.

The engine 11 and the drive device 12 are arranged side by side in a vehicle width direction. Specifically, the drive device 12 is located on the left side of the engine 11.

The drive device 12 and an auxiliary battery 13 are arranged on the left side of the engine 11.

The hybrid electric vehicle 100 includes the auxiliary battery 13, an electric coolant heater 14, and a motor-driven compressor 15 that are disposed in the engine compartment 10. The auxiliary battery 13, the electric coolant heater 14, and the motor-driven compressor 15 are electrical devices that are operated by power.

The auxiliary battery 13 is disposed above the drive device 12. The auxiliary battery 13 stores electrical energy. The auxiliary battery 13 supplies the stored electrical energy to other devices. For example, the auxiliary battery 13 supplies power to an electronic control unit that controls a motor generator. The motor generator will be described later.

The electric coolant heater 14 is disposed above the engine 11. The electric coolant heater 14 heats coolant in the engine 11.

The motor-driven compressor 15 is disposed on the front side of the engine 11. The motor-driven compressor 15 compresses refrigerant gas that is used to adjust the temperature of the passenger compartment.

In Fig. 1, the double-dashed line extending in the vehicle width direction divides the engine compartment 10 into a region where the engine 11 is located and a region where the drive device 12 is located. In Fig. 1, the region on the right side of the double-dashed line is the region where the engine 11 is located, and the region on the left side of the double-dashed line is the region where the drive device 12 is located.

The hybrid electric vehicle 100 includes a storage box 16. The storage box 16 is disposed on the left side of the double-dashed line. That is, the storage box 16 is arranged in the region where the drive device 12 is located in the engine compartment 10. The storage box 16 is arranged along the edge of the engine compartment 10. The storage box 16 stores a relay and a fuse of a device to which power is supplied from the auxiliary battery 13.

### Configuration of the Drive Device 12

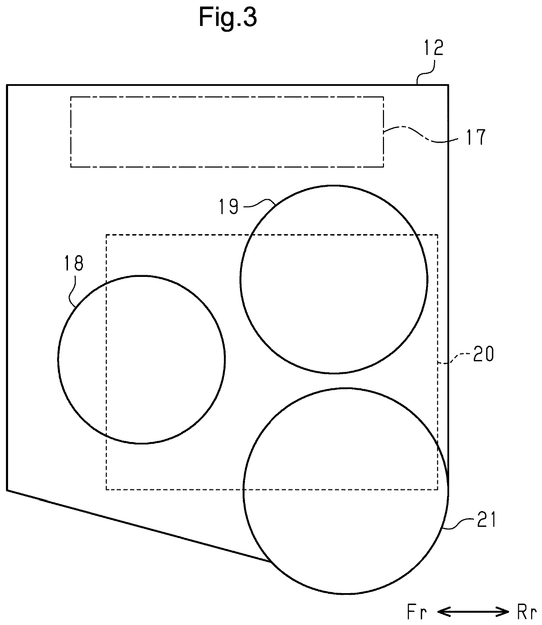

Fig. 3 shows a configuration of the drive device 12. As shown in Fig. 3, a power control unit 17, a first motor generator 18, a second motor generator 19, and a gear mechanism 20 are integrated in the drive device 12.

The first motor generator 18 and the second motor generator 19 (hereinafter collectively referred to as motor generators) are driven when power is supplied. As a result, the front wheels (i.e., drive wheels) rotate. The motor generators are configured to generate power from rotation of the engine 11.

The hybrid electric vehicle 100 includes, in addition to the auxiliary battery 13, a battery that stores electrical energy at a higher voltage than that of the auxiliary battery 13. The power control unit 17 controls power supplied from the battery to the motor generators. For example, the power control unit 17 adjusts a voltage of power supplied to the motor generators. Also, for example, the power control unit 17 converts direct-current power supplied to the motor generators into alternating-current power.

The gear mechanism 20 is a power split mechanism. The gear mechanism 20 includes a planetary gear mechanism including a sun gear, a ring gear, and a planetary carrier. The planetary carrier is connected to the engine 11. The sun gear is connected to the first motor generator 18. The ring gear is connected to the second motor generator 19 and a differential device 21. The gear mechanism 20 integrates the output of the engine 11 and the output of the motor generators, changes the speed of the integrated output, and transmits the output following the speed change to the differential device 21.

As shown in Fig. 3, the drive device 12 includes the differential device 21. The differential device 21 is connected to the gear mechanism 20. The differential device 21 distributes, to the left and right front wheels, rotation transmitted from the gear mechanism 20.

### Electrical Connection Relationship Between Devices

As indicated by the broken lines in Fig. 1, the devices are electrically connected to each other through cables.

As shown in Fig. 1, the auxiliary battery 13 and the storage box 16 are electrically connected to each other. The storage box 16 is electrically connected not only to the auxiliary battery 13 but also to the device to which power is supplied from the auxiliary battery 13. The electrical energy stored in the auxiliary battery 13 is supplied through the storage box 16 to the device connected to the storage box 16.

As described above, the hybrid electric vehicle 100 includes a battery other than the auxiliary battery 13, the battery storing electrical energy at a voltage higher than that of the auxiliary battery 13. The power control unit 17 is configured to distribute electrical energy stored in the battery other than the auxiliary battery 13 to an electrical device connected to the power control unit 17.

The electric coolant heater 14 is electrically connected to the power control unit 17. The motor-driven compressor 15 is electrically connected to the power control unit 17. The power control unit 17 distributes the electrical energy stored in the battery to the electric coolant heater 14 and the motor-driven compressor 15.

### Operation of the Present Embodiment

The power control unit 17, the gear mechanism 20, and the motor generators are integrated in the drive device 12. Thus, the height of the drive device 12 is reduced as compared with when the power control unit 17 is independently disposed above the gear mechanism 20 and the motor generators. The electrical devices are arranged in an empty space above the drive device 12.

### Advantages of the Present Embodiment

(1) In the hybrid electric vehicle 100, the electrical devices, in addition to the motor generators, the gear mechanism 20, and the power control unit 17, are arranged as compactly as possible in the engine compartment 10.
(2) The electrical devices include the auxiliary battery 13, which stores electrical energy. Thus, in the hybrid electric vehicle 100, the engine compartment 10 accommodates the auxiliary battery 13, in addition to the motor generators, the gear mechanism 20, and the power control unit 17, as compactly as possible.
(3) The hybrid electric vehicle 100 includes the storage box 16. The storage box 16 is connected to the auxiliary battery 13 and the device to which electricity is supplied from the auxiliary battery 13. The storage box 16 stores the relay and the fuse of the device to which power is supplied from the auxiliary battery 13. The engine compartment 10 is divided into the region where the engine 11 is located and the region where the drive device 12 is located. Further, the two regions are arranged side by side in the vehicle width direction. In addition, the storage box 16 is arranged along the edge of the engine compartment 10 in the region where the drive device 12 is located.

When the storage box 16 is arranged along the edge of the engine compartment 10, operations such as fuse replacement are facilitated. Further, as the auxiliary battery 13 and the storage box 16 are located closer to each other, the length of a cable routed between these components is shortened.

The storage box 16 is arranged at the edge of the engine compartment 10, and in the region where the drive device 12 is located in the engine compartment 10. This allows the hybrid electric vehicle 100 to achieve both ease of operation and a reduction in the distance between the storage box 16 and the auxiliary battery 13.

(4) The hybrid electric vehicle 100 includes the motor-driven compressor 15. The motor-driven compressor 15 is disposed on the front side of the engine 11.

### Modifications

The above embodiment may be modified as follows. The above embodiment and the following modifications can be combined as long as the combined modifications remain technically consistent with each other.

The storage box 16 may be disposed in the region where the engine 11 is located in the engine compartment 10. In addition, the storage box 16 may be disposed not at the edge of the engine compartment 10, but may be located away from the edge.

The motor-driven compressor 15 does not have to be disposed on the front side of the engine 11. For example, the motor-driven compressor 15 may be disposed above the engine 11. For example, the motor-driven compressor 15 may be disposed on the front side of the drive device 12.

The gear mechanism 20 is not limited to a power split mechanism including a planetary gear mechanism. For example, the gear mechanism 20 may be a transmission including gears. For example, the gear mechanism 20 may be a reduction gear including gears.

The electrical devices disposed above the drive device 12 do not have to include the auxiliary battery 13.

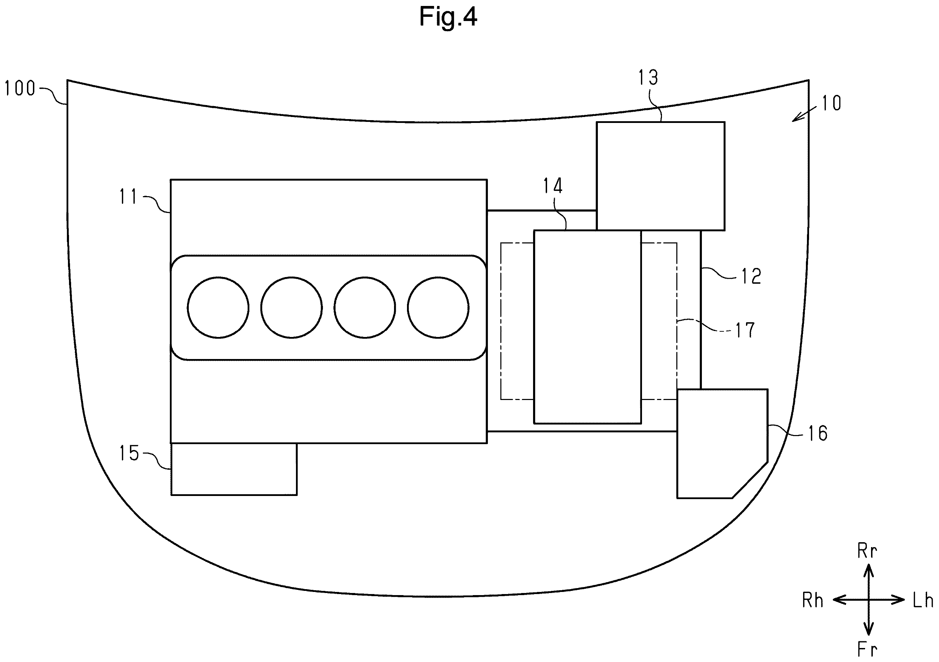

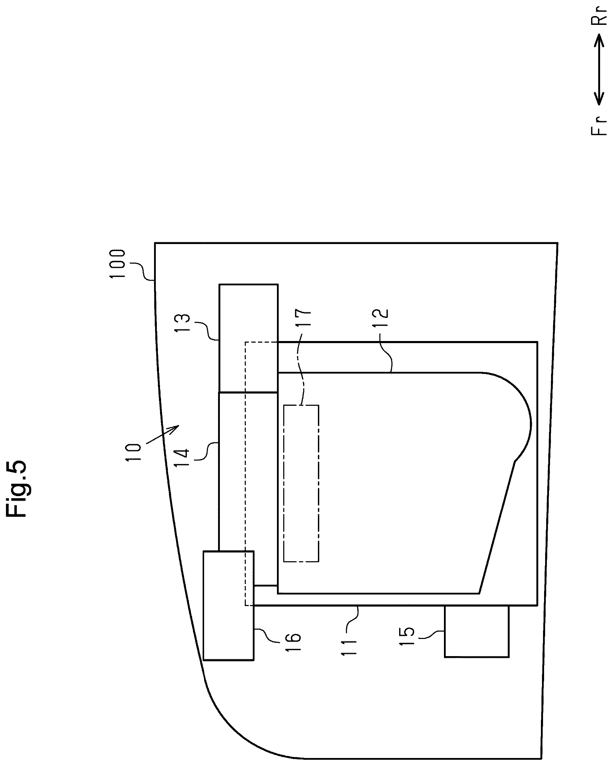

Fig. 4 shows the arrangement of the devices in the engine compartment 10 when the hybrid electric vehicle 100 according to a first modification is viewed from above. Fig. 5 shows the arrangement of the devices in the engine compartment 10 of the hybrid electric vehicle 100 of the first modification, as viewed from the left side as seen by an occupant facing forward in the hybrid electric vehicle 100.

As shown in Figs. 4 and 5, in the hybrid electric vehicle 100 of the first modification, the electric coolant heater 14 is disposed above the drive device 12. In the hybrid electric vehicle 100 of the first modification, the auxiliary battery 13 is disposed behind the electric coolant heater 14.

In this case, the power control unit 17 is configured to distribute power to other devices. The electrical devices disposed above the drive device 12 include the electric coolant heater 14, which is connected to the power control unit 17 and heats coolant in the engine 11.

The electric coolant heater 14 is disposed above the drive device 12. As a result, the hybrid electric vehicle 100 allows the electric coolant heater 14, in addition to the motor generators, the gear mechanism 20, and the power control unit 17, to be arranged as compactly as possible in the engine compartment 10. This reduces the distance between the electric coolant heater 14 and the power control unit 17, thereby shortening a cable connecting these components.

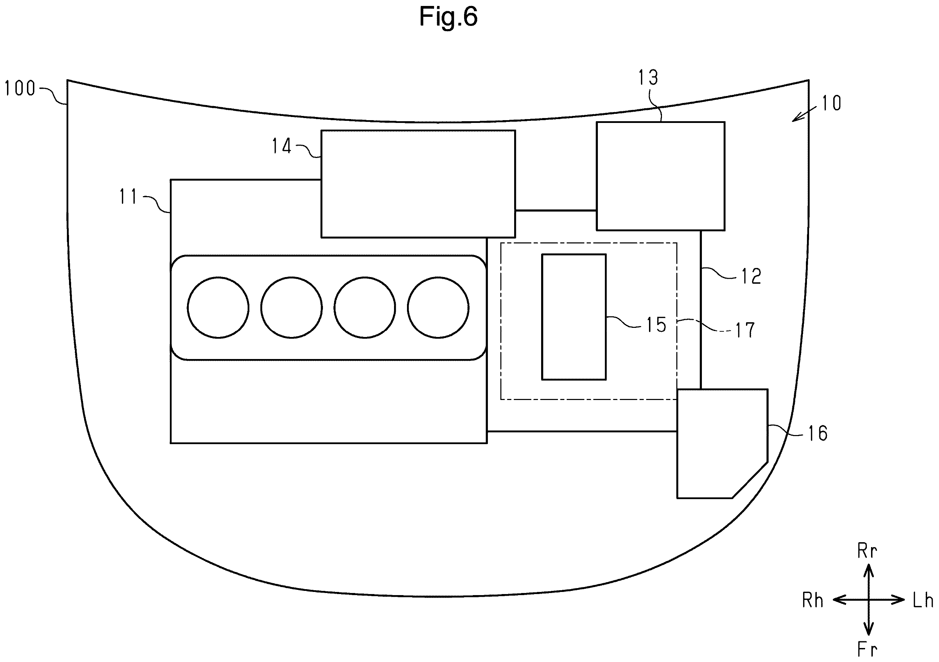

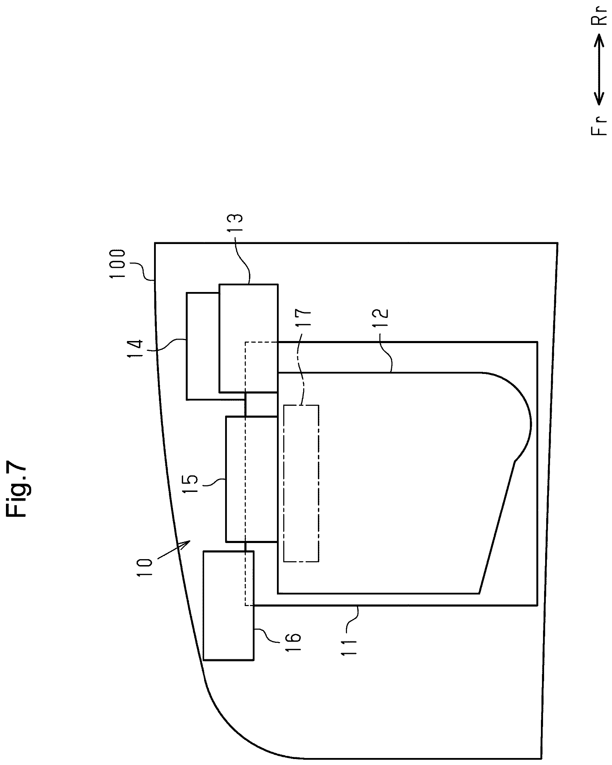

Fig. 6 shows the arrangement of the devices in the engine compartment 10 when the hybrid electric vehicle 100 according to a second modification is viewed from above. Fig. 7 shows the arrangement of the devices in the engine compartment 10 of the hybrid electric vehicle 100 of the second modification, as viewed from the left side as seen by an occupant facing forward in the hybrid electric vehicle 100.

As shown in Figs. 6 and 7, in the hybrid electric vehicle 100 of the second modification, the motor-driven compressor 15 is disposed above the drive device 12. As shown in Figs. 6 and 7, in the hybrid electric vehicle 100 of the second modification, the auxiliary battery 13 is disposed behind the motor-driven compressor 15.

In this case, the power control unit 17 is configured to distribute power to other devices. The electrical devices disposed above the drive device 12 include the motor-driven compressor 15, which is connected to the power control unit 17.

The motor-driven compressor 15 is disposed above the drive device 12. As a result, the hybrid electric vehicle 100 allows the motor-driven compressor 15, in addition to the motor generators, the gear mechanism 20, and the power control unit 17, to be arranged as compactly as possible in the engine compartment 10. This reduces the distance between the motor-driven compressor 15 and the power control unit 17, thereby shortening a cable connecting the two components.

In the above embodiment, the hybrid electric vehicle 100 has been described by way of example; however, the hybrid electric vehicle 100 does not have to be employed. The engine may function as a drive source for vehicle traveling and/or as a drive source for power generation. Power generated using the engine may be used to charge a battery that supplies power to a travel motor and/or to drive the travel motor. For example, a range-extended electric vehicle (REEV) may be employed. In such a vehicle, the engine is used only as a drive source for power generation and is not used as a drive source for vehicle traveling.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (100) comprising an engine compartment (10) at a front portion of the vehicle (100), wherein
the engine compartment (10) includes:
a drive device (12), wherein a motor generator (18, 19), a power control unit (17) that controls power supplied to the motor generator (18, 19), and a gear mechanism (20) are integrated in the drive device (12); and
an electrical device (13, 14, 15),
the drive device (12) and an engine (11) are arranged side by side in a vehicle width direction, and
the electrical device (13, 14, 15) is disposed above the drive device (12).

2. The vehicle (100) according to claim 1, wherein
the electrical device is an auxiliary battery (13) that stores electrical energy.

3. The vehicle (100) according to claim 2, further comprising a storage box (16) connected to the auxiliary battery (13) and a device to which power is supplied from the auxiliary battery (13), the storage box (16) storing a relay and a fuse of the device to which power is supplied from the auxiliary battery (13), wherein
the engine compartment (10) is divided into a region where the engine (11) is located and a region where the drive device (12) is located, the two regions being arranged side by side in the vehicle width direction, and
the storage box (16) is arranged along an edge of the engine compartment (10) in the region where the drive device (12) is located.

4. The vehicle (100) according to claim 1, wherein
the power control unit (17) is configured to distribute power to other devices, and
the electrical device is an electric coolant heater (14) that heats coolant in the engine (11), the electric coolant heater (14) being connected to the power control unit (17).

5. The vehicle (100) according to any one of claims 1 to 4, further comprising a motor-driven compressor (15) disposed on a front side of the engine (11).

6. The vehicle (100) according to claim 1, wherein
the power control unit (17) is configured to distribute power to other devices, and
the electrical device is a motor-driven compressor (15) connected to the power control unit (17).
